# FASCICULE DE BREVET EUROPEEN

(11) **EP 3 494 323 B1**
(45) Date de publication et mention de la délivrance du brevet: **08.07.2020**
(21) Numéro de dépôt: 17765207.0
(22) Date de dépôt: 24.07.2017
(51) Int. Cl.: F16D 21/06

(54) **MECANISME A DOUBLE EMBRAYAGE COMPACT ET SYSTEME DE TRANSMISSION COMPRENANT UN TEL MECANISME A DOUBLE EMBRAYAGE**
KOMPAKTER DOPPELKUPPLUNGSMECHANISMUS UND GETRIEBESYSTEM MIT SOLCH EINEM DOPPELKUPPLUNGSMECHANISMUS
COMPACT DUAL-CLUTCH MECHANISM AND TRANSMISSION SYSTEM COMPRISING SUCH A DUAL-LUTCH MECHANISM

(30) Priorité: 04.08.2016 FR 1657582
(43) Date de publication de la demande: 12.06.2019
(73) Titulaire: Valeo Embrayages, 80009 Amiens Cedex 2 (FR)
(72) Inventeur: RIBOT, Herve, 80009 Amiens (FR); DELPLACE, David, 80009 Amiens (FR); CAUMARTIN, Laurent, 80009 Amiens (FR); VUAROQUEAUX, Guillaume, 80009 Amiens (FR)
(86) Numéro de dépôt international: PCT/FR2017/052045
(87) Numéro de publication internationale: WO 2018/024966

(56) Documents cités:
- DE-A1-102009 059 942
- DE-A1-102012 201 524
- DE-A1-102014 209 618

## Description

### Domaine technique

La présente invention concerne un mécanisme à double embrayage placé dans une configuration radiale et tel qu'utilisé dans le domaine de l'automobile. L'invention concerne aussi un système de transmission intégrant un tel mécanisme à double embrayage.

### État de la technique antérieure

On connait des mécanismes à double embrayage comprenant un premier et un deuxième embrayage ainsi qu'un premier et un deuxième actionneur permettant de générer un effort pour configurer respectivement le premier et le deuxième embrayage dans une configuration embrayée ou débrayée. L'effort généré au niveau de chaque actionneur est transmis à l'embrayage correspondant par l'intermédiaire d'un organe de transmission d'effort. Ainsi, le déplacement de l'actionneur est transmis à l'organe de transmission d'effort correspondant qui, à son tour, déplace des premiers éléments de friction par rapport à des deuxièmes éléments de friction de l'embrayage correspondant afin de le configurer dans l'une ou l'autre des configurations citées.

De manière plus particulière, on connait les mécanismes à doubles embrayages radiaux qui permettent déjà de réduire leur encombrement axial. Dans ce cas en effet, le premier embrayage - appelé embrayage extérieur - est agencé suivant diamètre supérieur au diamètre du deuxième embrayage - appelé embrayage intérieur. L'embrayage intérieur est ainsi logé au moins en partie dans la partie centrale de l'embrayage extérieur et permet de réduire l'encombrement axial en comparaison aux mécanismes à doubles embrayages axiaux, au détriment d'un encombrement radial plus important. Un tel embrayage radial est connu, par exemple, de DE102014209618A1.

Cependant, la réduction de l'encombrement axial des mécanismes à double embrayages radiaux est limitée d'une part par la présence de certains éléments mécaniques situés à l'intérieurs des premiers et deuxièmes embrayages tels que par exemple un palier supportant les efforts radiaux de chaque embrayage, et d'autre part par le débattement axial des actionneurs nécessaire pour passer de l'une à l'autre des configurations de chaque embrayage correspondant, associé à la forme des organes de transmission d'efforts correspondants. En effet, dans un mécanisme à double embrayage, il est impératif d'empêcher toute interférence entre les mouvements de chaque organe de transmission d'effort de manière à ne pas configurer simultanément les deux embrayages dans la configuration embrayée, qui conduirait alors à une destruction au moins partielle du mécanisme à double embrayage et de la transmission associée.

La présente invention a pour objet de répondre au moins en grande partie aux problèmes précédents et de conduire en outre à d'autres avantages.

Un autre but de l'invention est de proposer un nouveau mécanisme à double embrayage pour résoudre au moins un de ces problèmes.

Un autre but de la présente invention est de rendre plus compact axialement un tel mécanisme à double embrayage.

Un autre but de l'invention est d'améliorer la fiabilité d'un tel mécanisme à double embrayage.

### Exposé de l'invention

Selon un premier aspect de l'invention, on atteint au moins l'un des objectifs précités avec un mécanisme à double embrayage destiné à être installé entre un moteur et une transmission de véhicule automobile, le mécanisme à double embrayage comprenant :
- un sous-ensemble comprenant :
   o un premier embrayage d'axe de rotation,
   o un deuxième embrayage situé radialement à l'intérieur du premier embrayage, et
   o un fourreau d'extension axiale couplé en rotation à un porte-disques d'entrée des premier et deuxième embrayages au niveau d'une zone de connexion,
- un système d'actionnement comprenant un carter logeant :
   o un premier actionneur cylindrique agencé pour se déplacer axialement afin d'embrayer ou de débrayer le premier embrayage, et
   o un deuxième actionneur cylindrique agencé pour se déplacer axialement afin d'embrayer ou de débrayer le deuxième embrayage,
- un premier organe de transmission de force agencé pour transmettre un effort axial au premier embrayage et généré par le premier actionneur, et
- un deuxième organe de transmission de force agencé pour transmettre un effort axial au deuxième embrayage et généré par le deuxième actionneur.

Dans un mécanisme à double embrayage conforme au premier aspect de l'invention, à une distance radiale donnée par rapport à un axe de rotation dudit mécanisme à double embrayage, une face du deuxième organe de transmission de force est agencée pour pouvoir croiser une face en regard du premier organe de transmission de force.

Le mécanisme à double embrayage conforme au premier aspect de l'invention est ainsi plus compact axialement car il permet de réduire la distance entre le premier organe de transmission de force et le deuxième organe de transmission de force à une distance inférieure au débattement nécessaire pour configurer le premier embrayage dans sa configuration embrayée, le deuxième actionneur - et le deuxième embrayage - étant configurés dans leur configuration embrayée. Ainsi, lorsque le premier actionneur se déplace axialement vers l'avant pour configurer le premier embrayage dans sa configuration embrayée, la face du deuxième organe de transmission de force croise la face en regard du premier organe de transmission de force, lesdites faces étant prises préférentiellement au niveau du diamètre d'implantation du premier actionneur.

Cette configuration avantageuse permet aussi d'éviter toute interférence mécanique entre le premier et le deuxième organe de transmission de force, et donc de fiabiliser le mécanisme à double embrayage.

En d'autres termes, lorsque le premier embrayage est configuré dans sa configuration embrayée, et à une distance radiale donnée par rapport à l'axe de rotation du mécanisme à double embrayage, une partie d'extension radiale située préférentiellement à une extrémité radiale intérieure du premier organe de transmission de force est agencée pour s'insérer axialement dans une face en regard du deuxième organe de transmission de force. De manière préférentielle, la partie d'extension radiale intérieure du premier organe de transmission de force s'insère dans une face du deuxième organe de transmission de force située axialement en regard.

La partie d'extension radiale intérieure est préférentiellement formée par des doigts intérieurs, tels qu'ils seront décrits ultérieurement.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale, « l'intérieur » désignant une partie proximale de l'axe O et « l'extérieur » désignant une partie distale de l'axe O.

Le mécanisme à double embrayage conforme au premier aspect de l'invention peut comprendre avantageusement au moins un des perfectionnements ci-dessous, les caractéristiques techniques formant ces perfectionnements pouvant être prises seules ou en combinaison :
- la face en regard du premier organe de transmission de force fait partie d'une partie d'extension radiale intérieure dudit premier organe de transmission de force ;
- lorsque le premier embrayage est configuré dans sa configuration embrayée, la partie d'extension radiale intérieure s'insère axialement au moins en partie dans la face du deuxième organe de transmission de force et située axialement en regard ;
- le deuxième organe de transmission de force comprend au moins un trou pour permettre l'insertion de la partie d'extension radiale intérieure du premier organe de transmission de force lorsque le premier actionneur se déplace axialement pour embrayer le premier embrayage. Préférentiellement, le premier actionneur configure le premier embrayage par un déplacement axial vers l'avant qui est ensuite transmis au premier organe de transmission de force. Come évoqué précédemment, l'insertion de la partie du premier organe de transmission de force dans le trou est de préférence réalisée sans contact mécanique entre le premier et le deuxième organe de transmission de force afin d'éviter toute interférence mécanique entre le premier et le deuxième embrayage. Préférentiellement encore, la partie du premier organe de transmission de force qui s'insère dans le trou du deuxième organe de transmission de force est située axialement en regard dudit trou ;
- pour configurer chaque embrayage, l'organe de transmission d'effort correspondant est animé uniquement d'un mouvement de translation, préférentiellement axiale, généré par l'actionneur correspondant ;
- au moins une partie des trous du deuxième organe de transmission de force prend la forme d'un trou débouchant. Dans ce premier mode de réalisation, le deuxième organe de transmission de force est agencé pour que la partie du premier organe de transmission de force située en regard du trou puisse traverser le trou correspondant lorsque le premier actionneur configure le premier embrayage dans sa configuration embrayée ;
- au moins une partie des trous du deuxième organe de transmission de force prend la forme d'un amincissement local dudit deuxième organe de transmission de force, l'amincissement local étant situé sur la face en regard du premier organe de transmission de force. Dans ce deuxième mode de réalisation, le deuxième organe de transmission de force comprend des variations d'épaisseurs, certaines parties étant plus fines que d'autres. En particulier, la face du deuxième organe de transmission de force située du côté du premier organe de transmission de force comprend des alésages non traversant à l'intérieur desquels les parties du premier organe de transmission de force et situées en regard desdits alésages peut s'insérer partiellement lorsque le premier actionneur configure le premier embrayage dans sa configuration embrayée ;
- les trous du deuxième organe de transmission de force sont situés radialement sensiblement au niveau du premier actionneur ;
- les trous du deuxième organe de transmission de force sont situés au moins sur une portée d'extension radiale du deuxième organe de transmission de force, préférentiellement à une même distance radiale par rapport à l'axe de rotation du mécanisme à double embrayage ;
- le deuxième organe de transmission de force comprend au moins deux bras répartis de part et d'autre desdits trous afin de rigidifier ledit deuxième organe de transmission de force. D'une manière générale, dans une direction circonférentielle au deuxième organe de transmission de force, les bras sont formés par des parties de plus grande épaisseur dudit deuxième organe de transmission de force. Dans le cas où les trous sont débouchant, les bras correspondent bien évidemment à la matière située sur la portion circonférentielle reliant deux trous adjacents. Dans le cas où les trous ne sont pas débouchant mais formés par des amincissements locaux du côté de la face en regard au premier organe de transmission de force, alors les bras sont formés par les portions plus épaisses situées circonférentiellement entre deux trous adjacents ;
- les bras sont formés dans une partie d'extension radiale du deuxième organe de transmission de force, préférentiellement à une même distance radiale que le premier actionneur et par rapport à l'axe de rotation du mécanisme à double embrayage ;
- l'au moins un bras comprend une nervure sur au moins une face du deuxième organe de transmission de force afin de rigidifier ledit bras et d'éviter un mouvement en flexion axiale du deuxième organe de transmission de force lorsque le deuxième actionneur le déplace axialement pour configurer le deuxième embrayage dans l'une ou l'autre de ses configurations ;
- le premier organe de transmission de force comprend au moins un doigt intérieur en contact avec l'extrémité du premier actionneur. En d'autres termes, l'appui axial du premier organe de transmission sur le premier actionneur n'est pas régulièrement angulairement réparti autour de l'axe de rotation du mécanisme à double embrayage : le premier organe de transmission comprend ainsi des parties d'extension radiales - les doigts intérieurs - qui sont axialement en contact avec l'actionneurs, chaque partie d'extension radiale étant séparée par des zones le long desquels le premier organe de transmission de force n'est pas en contact avec le premier actionneur. Les zones séparant deux parties d'extension radiales sont formées par des évidements circonférentiels ;
- les doigts intérieurs s'étendent radialement vers l'intérieur ;
- les doigts intérieurs sont régulièrement angulairement répartis autour de l'axe de rotation du mécanisme à double embrayage ;
- la forme des doigts intérieurs du premier organe de transmission de force est complémentaire à la forme des trous du deuxième organe de transmission de force. De préférence, un jeu non nul existe entre la forme des doigts intérieurs et la forme des trous, de sorte que chaque doigt intérieur puisse être inséré dans le trou correspondant sans contact. En d'autres termes, chaque dimension du doigt intérieur est inférieure à la dimension analogue du trou correspondant. De préférence encore, tous les doigts intérieurs ont la même forme ; et tous les trous ont la même forme ;
- dans une direction circonférentielle au mécanisme à double embrayage, les trous et les doigts intérieurs sont répartis en alternance ;
- les trous du deuxième organe de transmission de force et les doigts intérieurs du premier organe de transmission de force sont angulairement régulièrement répartis autour de l'axe de rotation du mécanisme à double embrayage. De préférence, chaque trou du deuxième organe de transmission de force est axialement et angulairement aligné avec un doigt intérieur correspondant du premier organe de transmission de force ;
- toutes les dimensions latérales de chaque doigt intérieur sont inférieures aux dimensions latérales des trous correspondants afin de permettre une insertion sans contact du doigt intérieur dans le trou correspondant lorsque le premier actionneur déplace axialement le premier organe de transmission de force en direction du deuxième organe de transmission de force ;
- les trous du deuxième organe de transmission de force sont radialement et/ou angulairement alignés avec les doigts intérieurs du premier organe de transmission de force ;
- le mécanisme à double embrayage comprend une platine de fixation supportant radialement les premier et deuxième embrayages par l'intermédiaire d'un palier support. La platine de fixation est préférentiellement rapportée et fixée solidairement contre une face du carter, et plus particulièrement une face arrière dudit carter, la platine de fixation pouvant être fixée à la transmission. Cette configuration avantageuse permet de maintenir le système d'actionnement par l'une de ses extrémités, et préférentiellement du côté opposé aux embrayages afin de permettre de rapprocher axialement les actionneurs desdits embrayages et de les loger radialement en dessous desdits embrayages. La platine de fixation est fixée au carter par tout moyen de fixation connu, et préférentiellement par l'intermédiaire d'au moins une vis de fixation traversant ladite platine de fixation et collaborant avec des trous taraudés correspondants sur la face du carter contre laquelle la platine de fixation est en appui ;
- le palier support est du type d'un roulement à billes, éventuellement du type d'où palier à rouleaux ;
- le palier support est disposé axialement entre le carter et la platine de fixation ;
- une face circonférentielle extérieure du palier support est en appui contre une face intérieure de la gorge périphérique de la platine de fixation ;
- le mécanisme à double embrayage comprend un fourreau d'extension axiale couplé en rotation à un porte-disques d'entrée des premier et deuxième embrayages au niveau d'une zone de connexion située à une extrémité du fourreau ;
- le fourreau s'étend axialement entre les porte-disques de sortie et la transmission avec laquelle le mécanisme à double embrayage est agencé pour coopérer ;
- le fourreau est situé radialement entre les arbres de transmission et le carter du système d'actionnement. Plus particulièrement, le fourreau est situé radialement à l'intérieur d'un porte-disques d'entrée du mécanisme à double embrayage ;
- le fourreau est de forme générale cylindrique afin de loger à l'intérieur les arbres de transmission, préférentiellement sans contact radial ;
- le fourreau est en appui contre un deuxième moyeu de sortie par l'intermédiaire d'un palier axial afin de transmettre des efforts axiaux malgré les vitesses de rotation différentes entre ledit deuxième moyeu de sortie et le fourreau ;
- le palier support est décalé par rapport au carter dans une direction opposée à la zone de connexion par rapport au carter. En d'autres termes, le palier support est situé en arrière du carter, c'est-à-dire entre ledit carter et la transmission. Le système d'actionnement est ainsi supporté par la platine de fixation et sur le fourreau par l'intermédiaire du palier support et dans une configuration originale en « porte à faux » qui permet de rendre plus compact le mécanisme à double embrayage, et plus particulièrement au niveau des premier et deuxième embrayages et des organes de transmission de force ;
- le palier support est en appui radial sur le fourreau ;
- une face intérieure du palier support est en appui contre une face cylindrique extérieure du fourreau ;
- le palier support est axialement bloqué entre une face du carter d'une part, et un élément de blocage axial d'autre part. Plus particulièrement, le palier support est bloqué - vers l'avant - par une face arrière du carter qui empêche tout mouvement vers l'avant dudit palier support. De manière comparable, une face arrière du palier support est en appui contre une face avant de l'élément de blocage axial afin d'empêcher tout mouvement dudit palier support vers l'arrière. En particulier, l'élément de blocage axial est préférentiellement agencé pour être en appui contre une bague extérieure ou une bague intérieure du palier support ;
- l'élément de blocage axial est issu de matière avec le fourreau, ou la platine de fixation. Plus particulièrement, lorsque l'élément de blocage axial est issu de manière avec le fourreau, alors il peut prend la forme d'un épaulement circonférentiel - sur au moins une partie de la périphérie du fourreau - en saillie par rapport à la surface extérieure dudit fourreau, l'épaulement circonférentiel s'étendant radialement vers l'extérieur. De manière comparable, lorsque l'élément de blocage axial est issu de manière avec la platine de fixation, alors il peut prend la forme d'un rebord circonférentiel - sur au moins une partie de la périphérie de la platine de fixation - en saillie par rapport à la surface extérieure de ladite platine de fixation, le rebord circonférentiel s'étendant radialement vers l'intérieur ;
- l'élément de blocage axial est rapporté et monté sur la fourreau, ou éventuellement sur la platine de fixation ;
- l'élément de blocage axial est formé par un anneau de blocage monté dans une gorge circonférentielle du fourreau. Une dimension axiale de la gorge est supérieure ou égale à une dimension axiale de l'élément de blocage axial afin de permettre son insertion facilement dans la gorge. L'élément de blocage axial a des dimensions radiales telles qu'il s'étend radialement à l'extérieur de la gorge circonférentielle du fourreau et qu'il s'étend aussi en saillie par rapport à la surface extérieure dudit fourreau. Une fois monté, l'élément de blocage axial agencé pour être en appui axial contre une face arrière de la gorge circonférentielle du fourreau lorsque le pallier support est en appui contre lui. À titre d'exemple non limitatif, l'anneau de blocage peut prendre la forme d'un anneau fendu ou d'un circlip. Préférentiellement, l'anneau de blocage est agencé pour former un appui plan avec une bague intérieure du palier support ;
- le mécanisme à double embrayage comprend au moins un palier de reprise d'effort radial agencé pour supporter le carter, le palier de reprise d'effort radial étant situé axialement entre le palier support et la zone de connexion. Le palier de reprise d'effort est situé devant le palier support, de l'autre côté de la platine de fixation par rapport à la face arrière du carter, afin de réduire les effets du porte-à-faux générés par la configuration désaxée de la platine de fixation et du palier support par rapport au carter ;
- le palier de reprise d'effort radial est situé axialement en regard d'une portée circonférentielle du carter, la portée circonférentielle du carter s'étendant axialement sous le deuxième actionneur cylindrique ;
- le palier de reprise d'effort radial est situé radialement entre le carter et le fourreau ;
- le palier de reprise d'effort radial est logé dans une gorge circonférentielle du fourreau afin de bloqué axialement le palier de reprise d'effort radial par rapport au fourreau et de réduire son encombrement radial ;
- le palier de reprise d'effort radial est du type d'un roulement à aiguilles ou à rouleaux afin de réduire son encombrement radial ;
- chaque embrayage est préférentiellement du type multidisques ;
- le mécanisme à double embrayage est préférentiellement du type fonctionnant dans un environnement humide.

Selon un deuxième aspect de l'invention, il est proposé un système de transmission pour véhicule automobile comprenant un mécanisme à double embrayage conforme au premier aspect de l'invention ou à l'un quelconque de ses perfectionnements et dans lequel :
- le premier embrayage est couplé en rotation à un premier arbre de sortie de la transmission par l'intermédiaire d'un premier porte-disques de sortie,
- le deuxième embrayage est couplé en rotation à un deuxième arbre de sortie de la transmission par l'intermédiaire d'un deuxième porte-disques de sortie,
- le premier et le deuxième embrayages sont alternativement couplés en rotation à un voile d'entrée, ledit voile d'entrée étant couplé en rotation à un arbre d'entrée entrainé en rotation par au moins un vilebrequin.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en coupe axiale d'un exemple de réalisation du mécanisme à double embrayage conforme au premier aspect de l'invention ;
- la FIGURE 2 illustre une vue en perspective et partiellement coupée du mécanisme à double embrayage illustré à la FIGURE 1 ;
- la FIGURE 3 illustre une vue de détail en coupe axiale de l'interaction entre les premier et deuxième organes de transmission de force lorsque les premier et deuxième actionneurs configurent respectivement le premier et le deuxième embrayage dans leur configuration débrayée ;

- la FIGURE 4 illustre une vue de détail en coupe axiale de l'interaction entre les premier et deuxième organes de transmission de force lorsque le premier actionneur configure le premier embrayage dans sa configuration embrayée, le deuxième actionneur configurant le deuxième embrayage dans sa configuration débrayée ;
- la FIGURE 5 illustre une vue de détail en coupe axiale d'un autre exemple de réalisation du mécanisme à double embrayage conforme au premier aspect de l'invention ;
- la FIGURE 6 illustre une vue en perspective du deuxième organe de transmission de force de mécanisme à double embrayage illustré sur la FIGURE 5.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

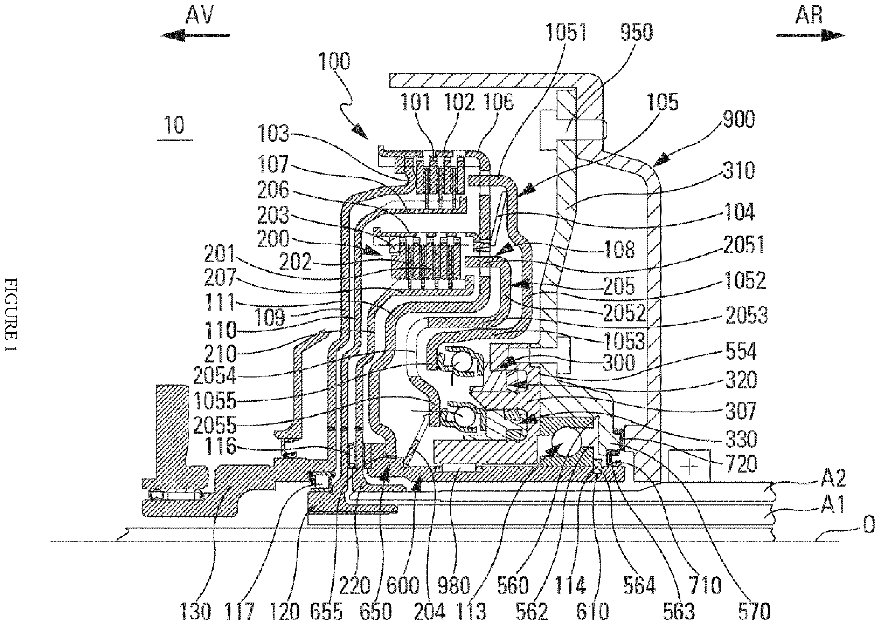

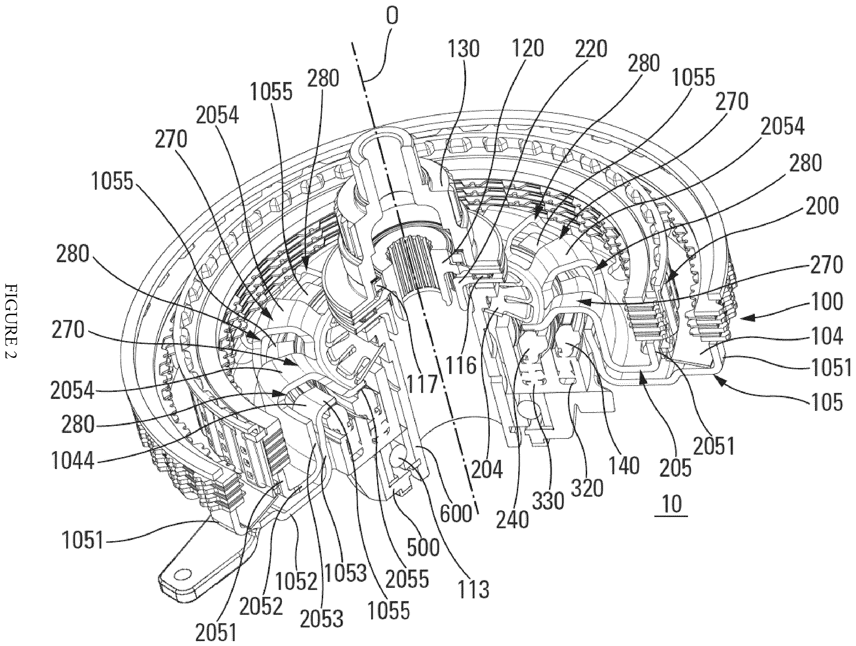

En référence aux FIGURES 1 et 2, l'exemple de réalisation illustré du mécanisme à double embrayage 10 conforme au premier aspect de l'invention est préférentiellement du type à double embrayage humide, et préférentiellement encore dans une position dite radiale, le premier embrayage 100 étant situé à l'extérieur du deuxième embrayage 200.

Alternativement, le mécanisme à double embrayage 10 peut être configuré dans une position dite axiale, le premier embrayage 100 étant agencé axialement vers l'arrière et le deuxième embrayage 200 étant agencé axialement vers l'avant.

D'une manière générale, le mécanisme à double embrayage 10 est agencé pour pouvoir coupler en rotation un arbre d'entrée non représenté à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée est entrainé en rotation par au moins un vilebrequin d'un moteur, par exemple un moteur thermique ; et les premier et deuxième arbres de transmission A1, A2 sont destinés à être couplés en rotation à une transmission telle que par exemple une boite de vitesses du type de celles équipant des véhicules automobiles.

De préférence, le premier arbre de transmission A1 et le deuxième arbre de transmission A2 sont coaxiaux. Plus particulièrement, le deuxième arbre de transmission A2 prend la forme d'un cylindre creux à l'intérieur duquel le premier arbre de transmission A1 peut être inséré.

Comme illustré sur la FIGURE 1, le premier embrayage 100 et le deuxième embrayage 200 sont avantageusement du type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Éventuellement, la pluralité de premiers éléments de friction 101, 201 consiste en des disques de friction liés solidairement en rotation à l'arbre d'entrée, et la pluralité de deuxièmes éléments de friction 102, 202 consiste en des flasques liées solidairement en rotation à au moins l'un des arbres de transmission A1, A2.

Le premier arbre de transmission A1 est couplé en rotation à l'arbre d'entrée et entraîné par lui en rotation lorsque le premier embrayage 100 est configuré dans une position dite embrayée pour laquelle la pluralité de premiers éléments de friction 101 est couplée en rotation à la pluralité de seconds éléments de friction 102. Alternativement, le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de seconds éléments de friction 102.

De manière analogue, le deuxième arbre de transmission A2 est couplé en rotation à l'arbre d'entrée et entraîné par lui en rotation lorsque le deuxième embrayage 200 est configuré dans une position embrayée pour laquelle la pluralité de premiers éléments de friction 201 est couplée en rotation à la pluralité de seconds éléments de friction 202. Alternativement, le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de seconds éléments de friction 202.

Bien entendu, chaque embrayage 100, 200 peut prendre n'importe quelle configuration entre la configuration embrayée et la configuration débrayée.

Dans le mécanisme à double embrayage 10 illustré sur la FIGURE 1, le premier embrayage 100 est agencé pour engager les rapports impairs de la transmission et le deuxième embrayage 200 est agencé pour engager les rapports pairs et la marche arrière de la transmission. Alternativement, les rapports pris en charge par lesdits premier embrayage 100 et deuxième embrayage 200 peuvent être respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de la configuration respective de chaque embrayage 100 et 200 et par l'intermédiaire d'un voile d'entrée 109.

Les embrayages 100 et 200 sont agencés pour ne pas être simultanément dans la même configuration embrayée. En revanche, les premier et deuxième embrayages 100, 200 peuvent simultanément être configurés dans leur position débrayée.

Le mécanisme à double embrayage 10 comprend un élément d'entrée qui est couplé en rotation d'une part à l'arbre d'entrée et d'autre part au voile d'entrée 109 afin de transmettre la puissance - le couple et la vitesse de rotation - générée au niveau du moteur à l'un des embrayages 100, 200 du mécanisme à double embrayage 10. De préférence, l'élément d'entrée du mécanisme à double embrayage 10 comprend un moyeu d'entrée 130, préférentiellement en rotation autour de l'axe 0. Sur son élongation inférieure, le moyeu d'entrée 130 est lié en rotation et/ou axialement à l'arbre d'entrée, éventuellement par l'intermédiaire d'un dispositif d'amortissement non représenté tel qu'un double volant amortisseur par exemple.

Sur son élongation extérieure, le moyeu d'entrée 130 est couplé au voile d'entrée 109, et plus particulièrement au niveau d'une extrémité inférieure et située vers l'avant dudit voile d'entrée 109. Préférentiellement, le voile d'entrée 109 et le moyeu d'entrée 130 sont solidaires, par exemple fixés par soudage et/ou par rivetage.

Du côté de son extrémité supérieure, le voile d'entrée 109 est lié en rotation au premier embrayage 100 par l'intermédiaire d'un porte-disques d'entrée 106, le porte-disques d'entrée 106 étant lié en rotation au voile d'entrée 109, préférentiellement par coopération de formes, par exemple par des cannelures.

Les premier et deuxième embrayages 100 et 200 sont commandés par un système d'actionnement 300 qui est agencé pour pouvoir les configurer dans une configuration quelconque comprise entre la configuration embrayée et la configuration débrayée.

Le système d'actionnement comprend :
- un premier actionneur 320 agencé pour configurer le premier embrayage 100 dans une configuration comprise entre la configuration embrayée et la configuration débrayée ;
- un deuxième actionneur 330 agencé pour configurer le deuxième embrayage 200 dans une configuration comprise entre la configuration embrayée et la configuration débrayée ;
- un carter 307 dans lequel sont logés au moins une partie des premier et deuxième actionneurs 320, 330.

De manière préférentielle, les premier et deuxième actionneurs 320 et 330 sont du type vérin hydraulique. Les premier et deuxième actionneurs 320, 330 peuvent chacun comprendre un piston annulaire, chaque piston annulaire étant coaxial avec l'axe O et développant un mouvement axial pour configurer l'embrayage correspondant. Dans ce cas, le système d'actionnement 300 comprend aussi un canal d'alimentation en fluide hydraulique pour chaque actionneur 320, 330. Préférentiellement, le fluide hydraulique est un fluide sous pression, par exemple de l'huile.

Le premier actionneur 320 est lié au premier embrayage 100 par l'intermédiaire d'une part d'un premier palier de découplage 140 et d'autre part d'un premier organe de transmission de force 105. Le premier palier de découplage 140 est agencé pour transmettre des efforts axiaux générés par le premier actionneur 320 au premier organe de transmission de force 105.

Le premier organe de transmission de force 105 est agencé pour transmettre un effort axial au premier embrayage 100 via son élongation supérieure, ladite élongation supérieure s'étendant axialement vers l'avant pour pouvoir écarter ou presser les premiers éléments de friction 101 contre les deuxièmes éléments de friction 102 d'une part, et contre un moyen de réaction extérieur 103 du voile d'entrée 109 d'autre part. Lorsque les premiers éléments de friction 101 sont écartés des deuxièmes éléments de friction 102, alors le premier embrayage 100 est configuré dans sa configuration débrayée. En revanche, lorsque les premiers éléments de friction 101 sont pressés contre les deuxièmes éléments de friction 102, alors le premier embrayage 100 est configuré dans sa configuration embrayée.

Le premier organe de transmission de force 105 prend la forme d'une tôle ondulée et incurvée axialement vers l'avant à son extrémité radiale extérieure. Plus particulièrement, le premier organe de transmission de force 105 collabore avec le premier embrayage 100 par l'intermédiaire d'une pluralité de portées d'extension axiales 1051 formant des doigts supérieurs 1051 qui permettent de pousser vers l'avant les éléments de friction 101, 102 du premier embrayage 100 sous l'effet d'un mouvement axial vers l'avant du premier actionneur 320.

À titre d'exemple non limitatif, le premier organe de transmission de force 105 peut être obtenu par emboutissage.

Le premier organe de transmission de force 105 comprend une portée d'extension radiale supérieure 1052 située en arrière des doigts supérieurs 1051. La portée d'extension radiale supérieure 1052 s'étend radialement depuis le premier embrayage 100 jusqu'à l'intérieur du deuxième embrayage 200.

Une portée d'extension axiale intermédiaire 1053 prolonge la portée d'extension radiale supérieure 1052 sous le deuxième embrayage 200, vers l'avant du mécanisme à double embrayage 10.

Enfin, le premier organe de transmission de force 105 comprend une partie d'extension radiale intérieure 1055 formant des doigts intérieurs 1055 et reliés à la portée d'extension axiale intermédiaire 1053 par l'intermédiaire d'une zone incurvée 1054. Les faces arrière des doigts intérieurs 1055 sont en contact avec une face avant du premier palier de découplage 140 connecté au premier actionneur 320.

Dans les paragraphes qui suivent, les doigts intérieurs 1055 du premier organe de transmission 105 sont dénommés les doigts 1055.

Le premier organe de transmission de force 105 sera décrit plus en détail en référence à la FIGURE 2.

Le moyen de réaction extérieur 103 est solidaire du voile d'entrée 109. De préférence, le moyen de réaction extérieur 103 est issu de matière du voile d'entrée 109 ; alternativement, le moyen de réaction extérieur 103 est fixé solidairement au voile d'entrée 109 par tous moyens de fixations, tels que par exemple par rivetage ou par soudage.

Le moyen de réaction extérieur 103 a une forme complémentaire à celle des premiers ou deuxièmes éléments de friction 101, 102, de manière à permettre un couplage par friction des premiers et deuxièmes éléments de friction 101, 102 lorsque le premier actionneur 320 exerce un effort axial vers l'avant pour configurer le premier embrayage 100 dans sa position embrayée. A contrario, lorsque le premier organe de transmission de force 105 est repoussé vers l'arrière par des moyens élastiques de rappel qui seront décrits ultérieurement, alors les premiers éléments de frictions 101 se séparent des deuxièmes éléments de friction 102, permettant alors de découpler lesdits éléments de friction et permettant ainsi de configurer le premier embrayage 100 dans sa configuration débrayée.

Le moyen de réaction extérieur 103 présente notamment des cannelures extérieures qui coopère avec des cannelures intérieures correspondantes du porte-disques d'entrée 106.

Le premier embrayage 100 est destiné à être couplé en rotation au premier arbre de transmission A1 par l'intermédiaire d'un premier porte-disques de sortie 110 formant un élément de sortie dudit premier embrayage 100. Plus particulièrement, le premier porte-disques de sortie 110 est couplé en rotation aux deuxièmes éléments de friction 102 au niveau de son extrémité supérieure d'une part, et d'autre part à un premier moyeu de sortie 120 au niveau de son extrémité inférieure.

Le premier porte-disques de sortie 110 comporte sur sa périphérie radiale extérieure une élongation axiale 107 qui est munie d'une denture destinée à coopérer avec une denture complémentaire sur chaque deuxième élément de friction 102, et plus particulièrement à la périphérie radiale intérieure de chaque deuxième élément de friction 102 du premier embrayage 100. Le premier porte-disques de sortie 110 est ainsi couplé en rotation par engrènement avec les deuxièmes éléments de friction 102 du premier embrayage 100.

Au niveau de son extrémité radiale inférieure, le premier porte-disques de sortie 110 est lié au premier moyeu de sortie 120, préférentiellement fixés ensemble par soudage ou par rivetage.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Un palier radial 117 est interposé entre le premier moyeu de sortie 120 et le moyeu d'entrée 130 afin de supporter les efforts radiaux du moyeu d'entrée 130 et/ou du voile d'entrée 109 malgré les vitesses de rotation différentes auxquelles peuvent respectivement tourner l'arbre d'entrée et le premier arbre de transmission A1.

De manière analogue, le deuxième embrayage 200 du mécanisme à double embrayage 10 est de conception similaire à celle du premier embrayage 100.

Le deuxième actionneur 330 est lié au deuxième embrayage 200 par l'intermédiaire d'une part d'un deuxième palier de découplage 240 et d'autre part d'un deuxième organe de transmission de force 205. Le deuxième palier de découplage 240 est agencé pour transmettre des efforts axiaux générés par le deuxième actionneur 330 au deuxième organe de transmission de force 205.

Le deuxième organe de transmission de force 205 est situé axialement entre le porte-disques d'entrée 106 et le premier organe de transmission de force 105.

Le deuxième organe de transmission de force 205 est agencé pour transmettre un effort axial au deuxième embrayage via son élongation supérieure, ladite élongation supérieure s'étendant axialement vers l'avant et au travers d'une ouverture 108 aménagée dans le porte-disques d'entrée 106 pour pouvoir écarter ou presser les premiers éléments de friction 201 contre les deuxièmes éléments de friction 202 d'une part, et contre un moyen de réaction intérieur 203 d'autre part. Lorsque les premiers éléments de friction 201 sont écartés des deuxièmes éléments de friction 202, alors le deuxième embrayage 200 est configuré dans sa configuration débrayée. En revanche, lorsque les premiers éléments de friction 201 sont pressés contre les deuxièmes éléments de friction 202, alors le deuxième embrayage 200 est configuré dans sa configuration embrayée.

Le deuxième organe de transmission de force 205 prend la forme d'une tôle ondulée et incurvée axialement vers l'avant à son extrémité radiale extérieure. Plus particulièrement, le deuxième organe de transmission de force 205 collabore avec le deuxième embrayage 200 par l'intermédiaire d'une pluralité de portées d'extension axiales 2051 formant des doigts intérieurs 2051 qui permettent de pousser vers l'avant les éléments de friction 201, 202 du deuxième embrayage 200 sous l'effet d'un mouvement axial vers l'avant du deuxième actionneur 330.

À titre d'exemple non limitatif, le deuxième organe de transmission de force 205 peut être obtenu par emboutissage.

Le deuxième organe de transmission de force 205 comprend une portée d'extension radiale supérieure 2052 située en arrière des doigts supérieurs 2051. La portée d'extension radiale supérieure 2052 s'étend radialement depuis le deuxième embrayage 200 jusqu'à l'intérieur du deuxième embrayage 200, et plus particulièrement à l'extérieur de la portée d'extension axiale intermédiaire 1053 du premier organe de transmission de force 105.

Une portée d'extension axiale intermédiaire 2053 prolonge la portée d'extension radiale supérieure 2052 sous le deuxième embrayage 200, vers l'avant du mécanisme à double embrayage 10. La portée d'extension axiale intermédiaire 2053 est située radialement à l'intérieur du deuxième embrayage 200 et à l'extérieur de la portée d'extension radiale supérieure 1052 du premier organe de transmission de force 105. Plus particulièrement, elle est située à l'intérieur du porte-disques d'entrée 106.

Enfin, le deuxième organe de transmission de force 205 comprend une partie d'extension radiale intérieure 2055 formant des doigts intérieurs 2055 et reliés à la portée d'extension axiale intermédiaire 2053 par l'intermédiaire d'une portée d'extension radiale 2054. Les faces arrière des doigts intérieurs 2055 sont en contact avec une face avant du deuxième palier de découplage 240 connecté au deuxième actionneur 330.

Le deuxième organe de transmission de force 205 sera décrit plus en détail en référence à la FIGURE 2, notamment au travers de ses interactions avec le premier organe de transmission de force 105. Le moyen de réaction intérieur 203 est solidaire d'une partie d'élongation axiale 206 orientée vers l'avant et solidaire du porte-disques d'entrée 106, fixée au porte-disques d'entrée 106 par tous moyens, tels que par exemple par soudage ou par rivetage. Alternativement, le moyen de réaction intérieur 203 et le porte-disques d'entrée 106 sont issus de matière. Le moyen de réaction extérieur 203 a une forme complémentaire à celle des premiers ou deuxièmes éléments de friction 201, 202, de manière à permettre un couplage par friction des premiers et deuxièmes éléments de friction 201, 202 lorsque le deuxième actionneur 330 exerce un effort axial vers l'avant pour configurer le deuxième embrayage 200 dans sa position embrayée. A contrario, lorsque le deuxième organe de transmission de force 205 est repoussé vers l'arrière par des moyens élastiques de rappel qui seront décrits ultérieurement, alors les premiers éléments de frictions 201 se séparent des deuxièmes éléments de friction 202, permettant alors de découpler lesdits éléments de friction 201, 202 et permettant ainsi de configurer le deuxième embrayage 200 dans sa configuration débrayée.

À titre d'exemple non limitatif, le moyen de réaction extérieur 203 peut prendre la forme d'un anneau avec une denture sur le pourtour extérieur et une gorge centrale d'appui qui s'étend axialement vers l'arrière.

Le deuxième embrayage 200 est destiné à être couplé en rotation au deuxième arbre de transmission A2 par l'intermédiaire d'un deuxième porte-disques de sortie 210 formant un élément de sortie dudit deuxième embrayage 200. Plus particulièrement, le deuxième porte-disques de sortie 210 est couplé en rotation aux deuxièmes éléments de friction 202 au niveau de son extrémité supérieure d'une part, et d'autre part à un deuxième moyeu de sortie 220 au niveau de son extrémité inférieure.

Le deuxième porte-disques de sortie 210 comporte sur sa périphérie radiale extérieure une élongation axiale 207 qui est munie d'une denture destinée à coopérer avec une denture complémentaire sur chaque deuxième élément de friction 202, et plus particulièrement à la périphérie radiale intérieure de chaque deuxième élément de friction 202 du deuxième embrayage 200. Le deuxième porte-disques de sortie 210 est ainsi couplé en rotation par engrènement avec les deuxièmes éléments de friction 202 du deuxième embrayage 200.

Au niveau de son extrémité radiale inférieure, le deuxième porte-disques de sortie 210 est lié au deuxième moyeu de sortie 220, préférentiellement fixés ensemble par soudage ou par rivetage. Par ailleurs, un palier axial 116 est intercalé entre le premier porte-disques de sortie 110 et le deuxième porte-disques de sortie 210 afin de pouvoir transmettre un effort axial entre les deux porte-disques de sortie 110, 210 qui peuvent tourner à des vitesses différentes lorsque les premier et deuxième embrayages 100, 200 sont configurés dans une configuration différente.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Les premier et deuxième embrayages 100, 200 comprennent respectivement des moyens élastiques de rappel 104, 204 pour repousser automatiquement le premier et le deuxième actionneur 320, 330 vers l'arrière. Plus particulièrement, les moyens élastiques de rappel 104, 204 sollicitent axialement le premier et respectivement le deuxième organe de transmission de force 105, 205 vers l'arrière afin de faciliter l'écartement des premiers éléments de friction 101, 201 par rapport aux deuxièmes éléments de friction 102, 202 du premier et respectivement du deuxième embrayage 100, 200 en repoussant le premier et le deuxième actionneur 320, 330 vers l'arrière.

De préférence, les moyens élastiques de rappel 104, 204 sont formés par des rondelles élastiques, telles que par exemple des rondelles Bellevilles. Plus particulièrement, les moyens élastiques de rappel 104 du premier embrayage 100 sont interposés axialement entre le premier organe de transmission de force 105 et le porte-disques d'entrée 106 ; et ils sont agencés radialement entre le premier embrayage 100 et le deuxième embrayage 200. Les moyens élastiques de rappel 204 du deuxième embrayage 200 sont interposés axialement entre le deuxième organe de transmission de force 205 et un fourreau 600 décrit plus en détail ci-après ; et ils sont agencées radialement au niveau du deuxième actionneur 330.

Le porte-disques d'entrée 106 comprend en outre un segment intérieur 111 qui s'étend radialement vers l'intérieur du mécanisme à double embrayage 10, en dessous du deuxième embrayage 200. Plus particulièrement, le segment intérieur 111 se compose d'une portée d'extension axiale qui s'étend vers l'avant sous le deuxième embrayage, et une portée d'extension radiale qui s'étend radialement entre le deuxième embrayage 200 et le fourreau 600.

À son extrémité inférieure, le segment intérieur 111 du porte-disques d'entrée 106 est fixé solidairement au fourreau 600 d'extension axiale au niveau d'une zone de connexion 650. Le segment intérieur 111 est fixé au fourreau 600 par tous moyens, tels que par exemple par rivetage ou par soudage. Ainsi, le fourreau 600 est entrainé en rotation par l'intermédiaire du porte-disques d'entrée 106, lui-même entrainé en rotation par le voile d'entrée 109 : le fourreau 106 tourne à la vitesse de l'arbre moteur.

Le fourreau 600 prend la forme d'un cylindre à l'intérieur duquel les arbres de transmission A1, A2 sont logés. Il s'étend axialement entre le deuxième porte-disques de sortie 210 et une face arrière du mécanisme à double embrayage 10. Radialement, le fourreau s'étend entre l'un des arbres de transmission A1, A2 et le carter 307 du système d'actionnement 300.

L'extrémité axiale avant du fourreau 600 comprend un alésage permettant l'introduction du deuxième moyeu de sortie 220 sans contact dans ledit fourreau 600. Au niveau de la zone de connexion 650, le fourreau comprend un épaulement 655 orienté axialement vers l'arrière. Une extrémité intérieure des moyens élastiques de rappel 204 du deuxième embrayage 200 est en appui contre l'épaulement 655. Une platine de fixation 500 est agencée d'une part pour supporter les efforts radiaux exercés par les premier et deuxième embrayages 100, 200, et d'autre part pour soutenir radialement le système d'actionnement 300.

Complémentairement, un palier radial 980 est situé radialement entre le fourreau 600 et le carter 307 afin de supporter radialement les efforts du système d'actionnement 300 sur le fourreau 600. Afin de limiter l'encombrement, le palier radial 980 est préférentiellement du type d'un palier à aiguilles ou d'un palier à rouleaux. Le palier radial 980 est situé axialement sous le carter 307, et préférentiellement sensiblement en dessous des premier et deuxième actionneurs 320, 330. De manière avantageuse, le palier radial 980 peut être logé dans une gorge circonférentielle du fourreau 600.

Dans l'exemple de réalisation illustré sur la FIGURE 1, le carter 307 du système d'actionnement 300 est fixé solidairement à la platine de fixation 500 par des moyens de fixation du type de vis de fixation par exemple. Plus particulièrement, au moins une partie d'une face arrière 354 du carter 307 est en appui axial contre une face avant 554 de la platine de fixation 500.

La platine de fixation 500 comprend une gorge périphérique 560 située axialement en arrière du carter 307 et orientée vers l'intérieur. Plus particulièrement, la gorge périphérique 560 est délimitée radialement vers l'extérieur par une face intérieure 561 de la platine de fixation 500. La face intérieure 561 de la platine de fixation est située radialement au niveau du deuxième actionneur 330. Axialement, la gorge périphérique 560 est délimitée vers l'arrière par un épaulement 562 de la platine de fixation 500, ledit épaulement étant orienté vers l'avant.

La gorge périphérique 560 ainsi délimitée est agencée pour loger un palier support 113 permettant de supporter la charge radiale des premier et deuxième embrayage 100, 200 ainsi que le système d'actionnement 300. Plus particulièrement, la face intérieure 561 de la platine de fixation 500 est en appui contre une face supérieure d'une bague supérieure du palier support 113 ; et une face arrière de la bague supérieure du palier support 113 peut éventuellement être en appui axial contre l'épaulement 562 de la platine de fixation 500. Complémentairement, une bague intérieure du palier support 113 est bloquée axialement par l'intermédiaire d'un anneau de blocage 114 logé dans une gorge périphérique 610 du fourreau 600. L'anneau blocage 114 est préférentiellement du type d'un circlip. L'anneau de blocage 114 s'étend radialement au-delà de la gorge périphérique 610 et de la face supérieure dudit fourreau 600.

De cette manière, le palier support 113 est en appui contre une face extérieure du fourreau 600 et entièrement contraint dans la gorge périphérique 560. Cette configuration avantageuse permet au palier support 113 de ne supporter plus que des efforts radiaux, rendant sa conception plus simple. De plus, le palier support 113 s'étend radialement sur un plus petit diamètre, puisqu'il est situé au niveau du fourreau 600. Il est donc de plus petites dimensions ce qui permet de réduire les coûts du mécanisme à double embrayage 10.

D'une manière générale, le palier à roulements 113 est du type d'un palier à roulements à billes.

Afin d'étanchéifier, au moins partiellement, voire complètement, le mécanisme à double embrayage 10, ce dernier comprend au niveau de son extrémité arrière un premier joint d'étanchéité 710 logé entre la platine de fixation 500 et le fourreau 600. Plus particulièrement, le premier joint d'étanchéité 710 au niveau d'une extrémité intérieure d'un talon 570 de la platine de fixation 500, une face intérieure 563 du talon 570 formant une surface d'appui radial pour une face extérieure du premier joint d'étanchéité 710. Radialement, le premier joint d'étanchéité 710 est situé au niveau de la bague intérieure du palier support 113. Pour plus de stabilité, et pour empêcher un déplacement vers l'avant du joint premier d'étanchéité 710, ce dernier est aussi en appui axial contre un épaulement axial 654 formé au niveau de l'extrémité inférieure du talon 570. Plus particulièrement, une partie radiale extérieure du premier joint d'étanchéité 710 est en appui axial vers l'avant contre l'épaulement 564. Une face intérieure du premier joint d'étanchéité 710 s'étend axialement le long de la surface supérieure du fourreau 600.

Le premier joint d'étanchéité 710 est agencé pour empêcher l'introduction un fluide de refroidissement dans le mécanisme à double embrayage 10 au niveau du palier support 113. D'une manière générale, le premier joint d'étanchéité 710 a pour but de canaliser le fluide de refroidissement en provenance de la transmission et de le diriger entre le fourreau et le deuxième arbre de transmission A2.

Le premier joint d'étanchéité 710 du mécanisme à double embrayage 10 est préférentiellement du type d'un joint dynamique compte tenu du différentiel de vitesse de rotation pouvant exister entre le fourreau 600 et la platine de fixation 500 et afin d'éviter son arrachement et/ou son usure prématurée. À titre d'exemple non limitatif, il peut s'agir d'un joint à lèvres.

Le mécanisme à double embrayage 10 comprend en outre un deuxième joint d'étanchéité 720 logé axialement contre une face arrière du talon 570 de la platine de fixation 500. Plus particulièrement, le deuxième joint d'étanchéité 720 prend appui sur un épaulement radial orienté vers l'extérieur et formé sur le talon 570 de la platine de fixation 500. Le deuxième joint d'étanchéité 720 comprend une portée d'extension axiale orientée vers l'avant et dont une face intérieure est en appui contre l'épaulement radial du talon 570.

Le deuxième joint d'étanchéité 720 comprend aussi une portée d'extension axiale qui est destinée à être prise en sandwich entre la platine de fixation 500 et la transmission ou une cloche d'embrayage 900 protégeant le mécanisme à double embrayage 10.

La platine de fixation 500 est fixée solidairement à la cloche d'embrayage par des moyens de fixation 950. Les moyens de fixation sont préférentiellement du type d'une vis de fixation orientée suivant une direction axiale, ladite vis de fixation collaborant d'une part avec un alésage axial réalisé dans un bras de fixation 310 de la platine de fixation 500 et d'autre part avec un trou taraudé situé sur la cloche d'embrayage 900 et situé en regard de l'alésage axial.

De manière avantageuse, les bras de fixation 310 de la platine de fixation 500 s'étendent radialement à l'extérieur du premier embrayage 100 de manière à faciliter l'accès aux moyens de fixation 950. En effet, les moyens de fixation 950 sont préférentiellement situés radialement à l'extérieur du premier embrayage 100, au niveau de l'extrémité radiale extérieure des bras de fixation 310.

De manière préférentielle, le deuxième joint d'étanchéité 720 est du type statique.

Le deuxième joint d'étanchéité permet de réaliser l'assemblage du mécanisme à double embrayage 10 sur la transmission ou sur la cloche d'embrayage 900 sans abimer les pièces en contact, et notamment le talon 570 de la platine de fixation 500.

En référence à la FIGURE 2 qui illustre une vue en perspective et partiellement coupée du mécanisme à double embrayage 10 illustré à la FIGURE 1, les interactions entre le premier organe de transmission de force 105 et le deuxième organe de transmission de force 205 vont maintenant être décrites plus en détail.

Le mécanisme à double embrayage 10 conforme au premier aspect de l'invention permet astucieusement de réduire son encombrement axial. D'habitude, l'encombrement axial est contraint par une limite inférieure définie par le débattement nécessaire au niveau des premier et deuxième actionneurs 320, 330 pour configurer respectivement les premier et deuxième embrayages 100, 200 : il est nécessaire que toute partie du premier organe de transmission de force 105 soit distante d'une partie du deuxième organe de transmission de force 205 axialement en regard de ladite partie du premier organe de transmission de force 105.

De manière astucieuse, la présente invention propose une configuration particulière du mécanisme à double embrayage 10 permettant de réduire cette limite inférieure, permettant d'améliorer la compacité axiale dudit mécanisme à double embrayage 10.

À cet effet, à une distance radiale donnée par rapport à un axe de rotation O du mécanisme à double embrayage 10, une face du deuxième organe de transmission de force 205 est agencée pour pouvoir croiser une face du premier organe de transmission de force 105. Plus particulièrement, dans l'exemple de réalisation illustré sur la FIGURE 2, le deuxième organe de transmission de force 205 comprend au moins un trou 280 - préférentiellement débouchant - pour permettre l'insertion d'une partie du premier organe de transmission de force 105 lorsque le premier actionneur 320 déplace axialement vers l'avant le premier organe de transmission de force 105.

Ainsi, le premier organe de transmission de force 105 et le deuxième organe de transmission de force 205 ont chacun une forme générale de tôle discoïdale pliée, de symétrie axiale d'axe O. Le premier organe de transmission de force 105 et le deuxième organe de transmission de force 205 comprennent aussi une ouverture centrale pour laisser passer au moins les arbres des transmission A1, A2. Du fait de la configuration coaxiale des premier et deuxième embrayages 100, 200, l'ouverture centrale du deuxième organe de transmission de force 205 est plus petite que l'ouverture centrale du premier organe de transmission de force 105.

Dans un plan transverse à l'axe O et depuis l'extrémité radiale intérieure à l'extrémité radiale extérieure de chaque premier et deuxième organe de transmission de force 105, 205, la tôle discoïdale pliée correspondante suit un profil de forme générale « en U ».

L'extrémité radiale intérieure 2055 du deuxième organe de transmission de force 205 prend la forme d'un anneau circulaire délimitant radialement à l'extérieur l'ouverture centrale dudit deuxième organe de transmission de force 205. Sur sa face arrière, l'extrémité radiale intérieure 2055 du deuxième organe de transmission de force 205 est en contact avec le deuxième palier de découplage 240 afin de transmettre l'effort axial généré par le deuxième actionneur 330 audit deuxième organe de transmission de force 205.

L'extrémité radiale intérieure 2055 du deuxième organe de transmission de force 205 se prolonge radialement vers l'extérieur par la portée d'extension radiale 2054 qui est située axialement en avant par rapport à ladite extrémité radiale intérieure 2055 afin de permettre au premier actionneur 320 et au premier organe de transmission de force 105 de pouvoir se déplacer axialement vers l'avant.

La portée d'extension radiale 2054 comprend des trous 280 aménagés sur une face 2056 du deuxième organe de transmission de force 205, ladite face 2056 étant orientée vers l'arrière en direction des actionneurs 320, 330. Les trous 280 ainsi ménagés dans la face 2056 permettent au premier organe de transmission de force 105 de se déplacer axialement vers l'avant lorsque le premier actionneur 320 configure le premier embrayage 100 dans sa configuration embrayée.

Les trous 280 sont représentés en traits pointillés sur les FIGURES 1, 3 et 4.

Plus particulièrement, les trous 280 permettent à la partie d'extension radiale intérieure 1055 - et plus particulièrement les doigts intérieurs 1055 - de s'insérer sans contact dans lesdits trous 280 situés en regard. Le deuxième organe de transmission de force 205 comprend ainsi une pluralité de trous 280 angulairement distants les uns des autres. Préférentiellement, les trous 280 du deuxième organe de transmission de force 205 sont angulairement régulièrement répartis autour de l'axe O. Dans l'exemple de réalisation illustré sur la FIGURE 2, le deuxième organe de transmission de force 205 comprend dix trous 280 angulairement distants de 36°.

À la différence du deuxième organe de transmission de force 205, le premier organe de transmission de force 105 ne forme pas une surface annulaire continue à proximité de son extrémité radiale intérieure 1055. A contrario, le premier organe de transmission de force 105 comprend une pluralité de doigts intérieurs 1055 angulairement distants les uns des autres. Préférentiellement, les doigts intérieurs 1055 du premier organe de transmission de force 105 sont angulairement régulièrement répartis autour de l'axe O. Dans l'exemple de réalisation illustré sur la FIGURE 2, le premier organe de transmission de force 105 comprend dix doigts intérieurs 1055 angulairement distants de 36°.

Préférentiellement, les doigts intérieurs 1055 du premier organe de transmission de force 105 sont situés en avant par rapport à l'extrémité radiale intérieure 2055 du deuxième organe de transmission de force 205. Radialement, les doigts intérieurs 1055 du premier organe de transmission de force 105 sont situés à l'extérieur de l'extrémité radiale intérieure 2055 du deuxième organe de transmission de force 205. Plus particulièrement, les doigts intérieurs 1055 du premier organe de transmission de force 105 sont situés radialement au même niveau que la portée d'extension radiale 2054 du deuxième organe de transmission de force 205 d'une part, et d'autre part ils sont situés à une même position angulaire que les trous 280 du deuxième organe de transmission de force 205.

Ainsi, lorsque le premier actionneur 320 déplace le premier organe de transmission de force 105 axialement vers l'avant, alors le déplacement des doigts intérieurs 1055 dudit premier organe de transmission de force 105 ne provoque pas d'interférences avec le deuxième organe de transmission de force 205, et plus particulièrement avec sa portée d'extension radiale 2054. Au contraire, le déplacement vers l'avant des doigts intérieurs 1055 du premier organe de transmission de force 105 entraine une interpénétration desdits doigts intérieurs 1055 dans les trous 280 correspondant de la portée d'extension radiale 2054 du deuxième organe de transmission de force 205. En d'autres termes, une partie d'extension radiale intérieure 1055 formée par les doigts intérieurs 1055, et plus particulièrement au moins une face avant 1056 desdits doigts intérieurs 1055 - croise la face 2056 arrière de la portée d'extension radiale 2054 du deuxième organe de transmission de force 205, ladite face 2056 étant située en regard de la face avant 1056 des doigts intérieurs 1055 :
- dans une première configuration du mécanisme à double embrayage 10 dans laquelle, d'une part, le premier embrayage 100 et le premier actionneur 320 sont configurés dans une configuration embrayée et, d'autre part, le deuxième embrayage 200 et le deuxième actionneur 330 sont configurés dans une configuration débrayée, les doigts intérieurs 1055 du premier organe de transmission de force 105 - et plus particulièrement leur face avant 1056 -sont situés en avant et croisent la face 2056 arrière de la portée d'extension radiale 2054 du deuxième organe de transmission de force 205 ; et
- dans une deuxième configuration du mécanisme à double embrayage 10 dans laquelle, d'une part, le premier embrayage 100 et le premier actionneur 320 sont configurés dans une configuration débrayée et, d'autre part, le deuxième embrayage 200 et le deuxième actionneur 330 sont configurés dans une configuration embrayée, les doigts intérieurs 1055 du premier organe de transmission de force 105 - et plus particulièrement leur face avant 1056 - sont situés en arrière par rapport à la face 2056 arrière de la portée d'extension radiale 2054 du deuxième organe de transmission de force 205.

Dans un plan transverse à l'axe O, les dimensions latérales de chaque trou 280 du deuxième organe de transmission de force 205 sont complémentaires de celles de chaque doigt intérieur 1055 correspondant du premier organe de transmission de force 105, afin de permettre une insertion sans contact de chaque doigt intérieur 1055 du premier organe de transmission de force 105 dans chaque trou 280 du deuxième organe de transmission de force 205. Plus particulièrement, toutes les dimensions latérales des trous 280 sont supérieures aux dimensions analogues correspondantes des doigts intérieurs 1055.

Dans l'exemple de réalisation illustré à la FIGURE 2, tous les trous 280 du deuxième organe de transmission de force 205 sont débouchant.

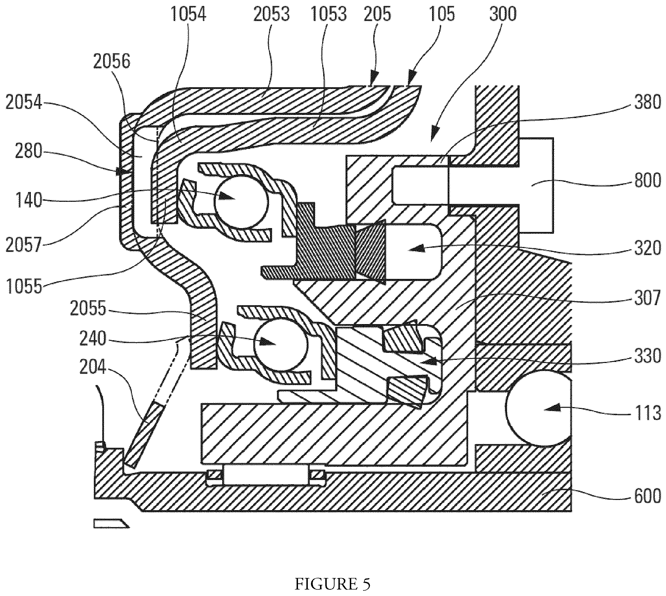

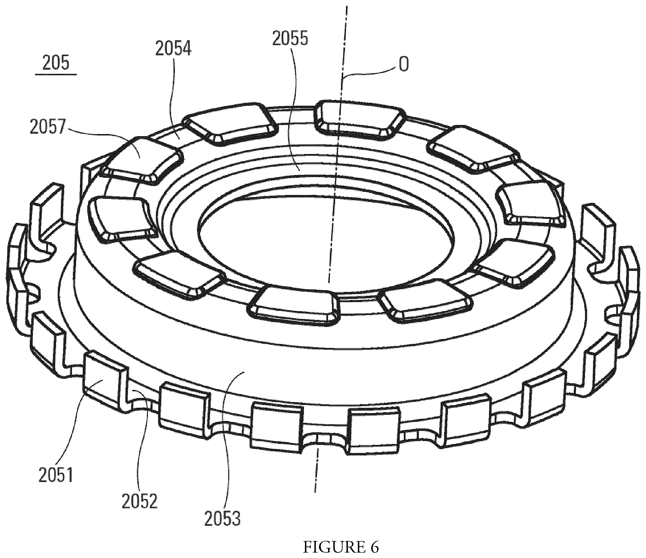

Alternativement, et comme illustré sur les FIGURES 5 et 6, tous les trous 280 du deuxième organe de transmission de force 205 peuvent être non-débouchant, chaque trou 280 étant réalisé sur la face 2056 arrière du deuxième organe de transmission de force 205 et s'étendant axialement vers l'avant de manière à permettre une insertion partielle et sans contact - axial et radial - des doigts intérieurs 1055 du premier organe de transmission de force 105 dans lesdits trous 280.

Plus particulièrement, la portée d'extension radiale 2054 du deuxième organe de transmission de force 205 comprend des trous 280 non débouchant aménagés sur la face 2056, ladite face 2056 étant orientée vers l'arrière en direction des actionneurs 320, 330. Dans l'exemple de réalisation illustré sur les FIGURES 5 et 6, les trous 280 non débouchant forment ainsi une cavité dans la portée d'extension radiale 2054 du deuxième organe de transmission de force 205, ladite cavité étant orientée vers l'arrière.

Les torus 280 non débouchant sont radialement situé au niveau du premier palier de découplage 140 du premier actionneur 320.

Selon une première variante de réalisation, chaque trou 280 non débouchant peut-être obtenu par un usinage de la face 2056 située en regard du premier organe de transmission de force 1056 afin d'amincir localement l'épaisseur de ladite portée d'extension radiale 2054 du deuxième organe de transmission de force 205. Cette première variante peut être mise en œuvre si la profondeur du trou 280 à réaliser est inférieure à l'épaisseur du deuxième organe de transmission.

Dans l'exemple de réalisation illustré sur les FIGURES 5 et 6, un bourrelet 2057 de matière est réalisé sur la portée d'extension radiale 2054 du deuxième organe de transmission de force 205 afin de renforcer sa rigidité. Le bourrelet 2057 de matière s'étend radialement au-delà du trou 280, de part et d'autre dudit trou 280.

Alternativement, selon une deuxième variante de réalisation, chaque trou 280 non débouchant peut-être obtenu par une mise en forme de la face 2056 située en regard du premier organe de transmission de force 1056 afin de créer la cavité formant le trou 280 non débouchant. La mise en forme de la face 2056 du deuxième organe de transmission de force 205 peut être réalisée par exemple par emboutissage afin de déformer localement ledit deuxième organe de transmission de force 205 et de créer ledit trou 280 non débouchant. Cette deuxième variante peut être mise en œuvre par exemple lorsque la profondeur du trou 280 à réaliser est supérieure à l'épaisseur du deuxième organe de transmission.

Les trous 280 non débouchant ainsi ménagés dans la face 2056 permettent au premier organe de transmission de force 105 de se déplacer axialement vers l'avant lorsque le premier actionneur 320 configure le premier embrayage 100 dans sa configuration embrayée.

Les trous 280 sont représentés en traits pointillés sur la FIGURE 6.

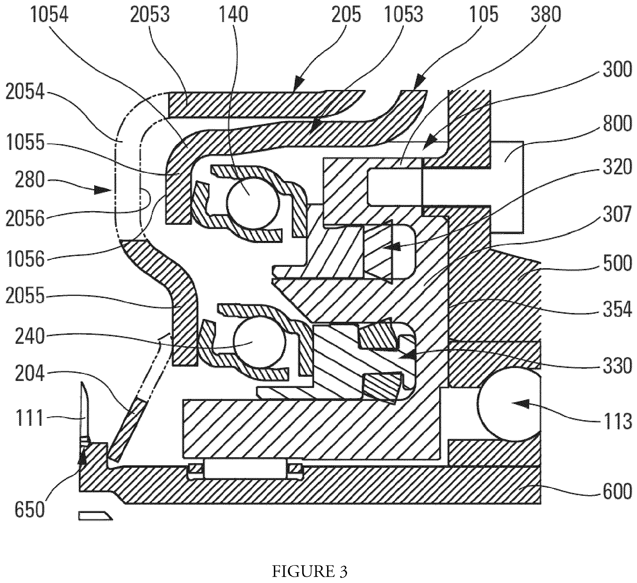

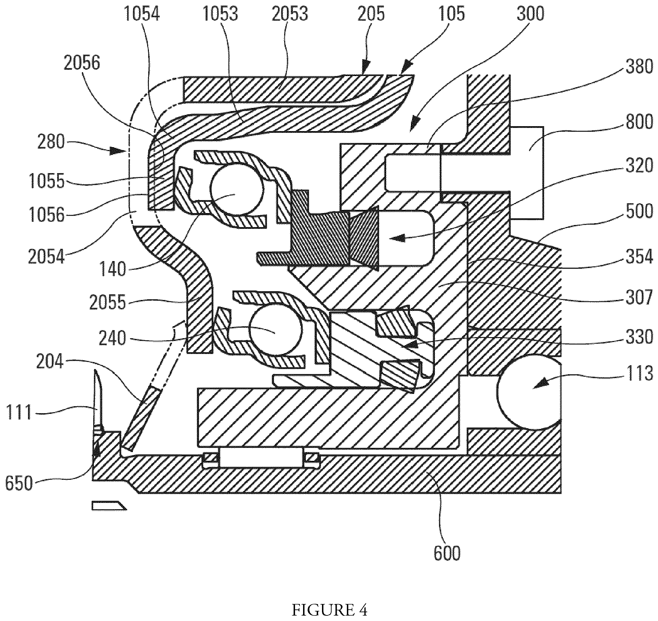

De manière comparable au mode de réalisation illustré sur les FIGURES 3 et 4, les trous 280 non débouchant tels qu'illustrés sur les FIGURES 5 et 6 permettent à la partie d'extension radiale intérieure 1055 - et plus particulièrement les doigts intérieurs 1055 - du premier organe de transmission de force 105 de s'insérer sans contact dans lesdits trous 280 non débouchant situés en regard. Le deuxième organe de transmission de force 205 comprend ainsi une pluralité de trous 280 non débouchant angulairement distants les uns des autres. Préférentiellement, les trous 280 non débouchant du deuxième organe de transmission de force 205 sont angulairement régulièrement répartis autour de l'axe O. Dans l'exemple de réalisation illustré sur la FIGURE 5, le deuxième organe de transmission de force 205 comprend dix trous 280 angulairement distants de 36°.

Éventuellement, une première partie des trous 280 du deuxième organe de transmission de force 205 est débouchant, tel que décrit précédemment, et une deuxième partie des trous 280 du deuxième organe de transmission de force 105 est non débouchant, tel que décrit précédemment.

Entre deux trous 280 adjacents du deuxième organe de transmission de force 205, la portée d'extension radiale 2054 prend la forme d'un bras 270 qui s'étend radialement entre l'anneau circulaire formé par l'extrémité radiale intérieure 2055 du deuxième organe de transmission de force 205 d'une part, et la portée d'extension axiale intermédiaire 2053. Ainsi, chaque trou 280 est bordé par deux bras 270.

Les dimensions axiales et latérales des bras 270 de la portée d'extension radiale 2054 - et donc celles des trous 280 qui le définissent latéralement - sont telles qu'elles n'affaiblissent pas la rigidité du deuxième organe de transmission de force 205, notamment du point de vue de la flexion axiale. Éventuellement, les bras 270 possèdent des nervures sur au moins une de leurs faces afin d'augmenter la rigidité en flexion desdits bras 270.

Les FIGURES 3 et 4, illustrent de manière plus précise l'interaction entre les premier et deuxième organes de transmission de force 105, 205. En particulier, la FIGURE 3 illustre une situation moteur à l'arrêt par exemple, dans laquelle les premier et deuxième embrayages 100, 200 sont simultanément configurés dans leur configuration débrayée par respectivement les premier et deuxième actionneurs 320, 330. La FIGURE 4 illustre une situation en fonctionnement durant laquelle le premier embrayage 100 est configuré dans sa configuration embrayée par le premier actionneur 320, et le deuxième embrayage 200 est configuré dans sa configuration débrayée par le deuxième actionneur 330.

Lorsque le premier actionneur 320 se déplace axialement vers l'avant, il emmène en translation le premier organe de transmission de force 105 par l'intermédiaire du premier palier de découplage 140. La partie d'extension radiale intérieure 1055 du premier organe de transmission de force 105 est ainsi déplacée axialement vers l'avant en direction du deuxième organe de transmission de force 205, et plus particulièrement au niveau de la partie d'extension radiale 2054 formant une zone incurvée 2054.

Comme décrit précédemment, la partie d'extension radiale intérieure forme des doigts intérieurs 1055 en contact avec le premier palier de découplage 140. Aussi, sous l'effet du déplacement vers l'avant du premier actionneur 320, chaque doigt intérieur 1055 pénètre dans le trou 280 formé par une partie évidée - débouchant comme illustré ici ou non débouchant - de la portée d'extension radiale 2054. Cette interpénétration des doigts intérieurs 1055 du premier organe de transmission de force 105 dans les trous 280 correspondant du deuxième organe de transmission de force 205 est réalisée sans contact afin d'éviter toute interférence mécanique entre le premier embrayage 100 et le deuxième embrayage 200.

Durant un tel déplacement axial vers l'avant, la portée axiale intermédiaire 1053 du premier organe de transmission de force 105 coulisse radialement à l'intérieur de la portée axiale intermédiaire 2053 du deuxième organe de transmission de force 205, sans contact.

Complémentairement, les FIGURES 3 et 4 illustrent aussi les moyens de fixation 800 de la platine de fixation 500 contre la face arrière 354 du carter 307 du système d'actionnement 300. Les moyens de fixation 800 illustrés sur les FIGURES 3 et 4 prennent la forme de vis de fixation traversant un alésage débouchant de la platine de fixation et collaborant avec un trou taraudé 380 sur la face arrière 354 dudit carter 307.

## Revendications

1. Mécanisme à double embrayage (10) destiné à être installé entre un moteur et une transmission (400) de véhicule automobile, le mécanisme à double embrayage (10) comprenant :
- un sous-ensemble comprenant :
- un premier embrayage (100) d'axe de rotation (O) ;
- un deuxième embrayage (200) situé radialement à l'intérieur du premier embrayage (100) ;
- un fourreau (600) d'extension axiale couplé en rotation à un porte-disques d'entrée (109) des premier (100) et deuxième (200) embrayages au niveau d'une zone de connexion (650);
- un système d'actionnement (300) comprenant un carter (307) logeant :
- un premier actionneur cylindrique (320) agencé pour se déplacer axialement afin d'embrayer ou de débrayer le premier embrayage (100) ;
- un deuxième actionneur cylindrique (330) agencé pour se déplacer axialement afin d'embrayer ou de débrayer le deuxième embrayage (200) ;
- un premier organe de transmission de force (105) agencé pour transmettre un effort axial au premier embrayage (100) et généré par le premier actionneur (320) ;
- un deuxième organe de transmission de force (205) agencé pour transmettre un effort axial au deuxième embrayage (200) et généré par le deuxième actionneur (330) ;
**caractérisé en ce que**, à une distance radiale donnée par rapport à l'axe de rotation (O), une face (2056) du deuxième organe de transmission de force (205) est agencée pour pouvoir croiser une face en regard (1056) du premier organe de transmission de force (105).

2. Mécanisme à double embrayage (10) selon la revendication précédente, **caractérisé en ce que** la face en regard (1056) du premier organe de transmission de force (105) fait partie d'une partie d'extension radiale intérieure (1055) dudit premier organe de transmission de force (105).

3. Mécanisme à double embrayage (10) selon la revendication précédente, **caractérisé en ce que**, lorsque le premier embrayage (100) est configuré dans sa configuration embrayée, la partie d'extension radiale intérieure (1055) s'insère axialement au moins en partie dans la face (2056) du deuxième organe de transmission de force (205) et située axialement en regard.

4. Mécanisme à double embrayage (10) selon l'une quelconque des revendications précédentes, **caractérisé en ce que** le deuxième organe de transmission de force (205) comprend au moins un trou (280) pour permettre l'insertion de la partie d'extension radiale intérieure (1055) du premier organe de transmission de force (105) lorsque le premier actionneur (320) se déplace axialement pour embrayer le premier embrayage (100).

5. Mécanisme à double embrayage (10) selon la revendication précédente, **caractérisé en ce que** au moins une partie des trous (280) du deuxième organe de transmission de force (205) prend la forme d'un trou débouchant.

6. Mécanisme à double embrayage (10) selon l'une quelconque des revendications 4 ou 5, **caractérisé en ce qu'**au moins une partie des trous (280) du deuxième organe de transmission de force (205) prend la forme d'un amincissement local dudit deuxième organe de transmission de force (205), l'amincissement local étant situé sur la face (2056) en regard du premier organe de transmission de force (105).

7. Mécanisme à double embrayage (10) selon l'une quelconque des revendications 4 à 6, **caractérisé en ce que** les trous (280) du deuxième organe de transmission de force (205) sont situés radialement sensiblement au niveau du premier actionneur (320).

8. Mécanisme à double embrayage (10) selon l'une quelconque des revendications 4 à 7, **caractérisé en ce que** les trous (280) du deuxième organe de transmission de force (205) sont situés au moins sur une portée d'extension radiale (2054) du deuxième organe de transmission de force (205).

9. Mécanisme à double embrayage (10) selon l'une quelconque des revendications 4 à 8, **caractérisé en ce que** le deuxième organe de transmission de force (205) comprend au moins deux bras (270) répartis de part et d'autre desdits trous (280) afin de rigidifier ledit deuxième organe de transmission de force (205).

10. Mécanisme à double embrayage (10) selon la revendication précédente, **caractérisé en ce que** les bras (270) sont formés dans une partie d'extension radiale (2054) du deuxième organe de transmission de force (205).

11. Mécanisme à double embrayage (10) selon l'une quelconque des revendications précédentes, **caractérisé en ce que** le premier organe de transmission de force (105) comprend au moins un doigt intérieur (1055) en contact avec l'extrémité du premier actionneur (320).

12. Mécanisme à double embrayage (10) selon la revendication précédente, **caractérisé en ce que** les trous (280) du deuxième organe de transmission de force (205) et les doigts intérieurs (1055) du premier organe de transmission de force (105) sont angulairement régulièrement répartis autour de l'axe de rotation (O) du mécanisme à double embrayage (10).

13. Mécanisme à double embrayage (10) selon l'une quelconque des revendications 9 ou 10, **caractérisé en ce que** toutes les dimensions latérales de chaque doigt intérieur (1055) sont inférieures aux dimensions latérales des trous (280) correspondants afin de permettre une insertion sans contact de chaque doigt intérieur (1055) dans les trous (280) correspondants lorsque le premier actionneur (320) déplace axialement le premier organe de transmission de force (105) en direction du deuxième organe de transmission de force (205).

14. Mécanisme à double embrayage (10) selon l'une quelconque des revendications 11 à 13, **caractérisé en ce que** les trous (280) du deuxième organe de transmission de force (205) sont radialement alignés avec les doigts (1055) du premier organe de transmission de force (105).

15. Système de transmission (1) pour véhicule automobile comprenant un mécanisme à double embrayage (10) selon l'une quelconque des revendications précédentes dans lequel :
- le premier embrayage (100) est couplé en rotation à un premier arbre de sortie (A1) de la transmission (400) par l'intermédiaire d'un premier porte-disques de sortie (110) ;
- le deuxième embrayage (200) est couplé en rotation à un deuxième arbre de sortie (A2) de la transmission (400) par l'intermédiaire d'un deuxième porte-disques de sortie (210) ;
- le premier (100) et le deuxième (200) embrayages sont alternativement couplés en rotation à un voile d'entrée (109), ledit voile d'entrée (109) étant couplé en rotation à un arbre d'entrée entrainé en rotation par au moins un vilebrequin.

## Patentansprüche

1. Doppelkupplungsmechanismus (10), der dazu bestimmt ist, zwischen einem Motor und einem Getriebe (400) eines Kraftfahrzeugs eingebaut zu werden, wobei der Doppelkupplungsmechanismus (10) umfasst:
- eine Baugruppe, umfassend:
- eine erste Kupplung (100) mit der Drehachse (O);
- eine zweite Kupplung (200), die radial innerhalb der ersten Kupplung (100) angeordnet ist;
- eine sich axial erstreckende Hülse (600), die in einem Verbindungsbereich (650) an einen Eingangslamellenträger (109) der ersten (100) und der zweiten (200) Kupplung drehgekoppelt ist;
- ein Betätigungssystem (300), das ein Gehäuse (307) umfasst, in dem aufgenommen sind:
- ein erster zylindrischer Aktor (320), der dazu eingerichtet ist, sich axial zu verlagern, um die erste Kupplung (100) einzurücken oder auszurücken;
- ein zweiter zylindrischer Aktor (330), der dazu eingerichtet ist, sich axial zu verlagern, um die zweite Kupplung (200) einzurücken oder auszurücken;
- ein erstes Kraftübertragungselement (105), das dazu eingerichtet ist, eine axiale und vom ersten Aktor (320) erzeugte Kraft auf die erste Kupplung (100) zu übertragen;
- ein zweites Kraftübertragungselement (205), das dazu eingerichtet ist, eine axiale und vom zweiten Aktor (330) erzeugte Kraft auf die zweite Kupplung (200) zu übertragen;
**dadurch gekennzeichnet, dass** in einem gegebenen radialen Abstand in Bezug auf die Drehachse (O) eine Seite (2056) des zweiten Kraftübertragungselements (205) dazu eingerichtet ist, eine gegenüberliegende Seite (1056) des ersten Kraftübertragungselements (105) kreuzen zu können.

2. Doppelkupplungsmechanismus (10) nach dem vorhergehenden Anspruch, **dadurch gekennzeichnet, dass** die dem ersten Kraftübertragungselement (105) gegenüberliegende Seite (1056) zu einem sich radial erstreckenden inneren Teil (1055) des ersten Kraftübertragungselements (105) gehört.

3. Doppelkupplungsmechanismus (10) nach dem vorhergehenden Anspruch, **dadurch gekennzeichnet, dass**, wenn die erste Kupplung (100) in ihrer eingerückten Anordnung angeordnet ist, der sich radial erstreckende innere Teil (1055) sich axial zumindest teilweise in die axial gegenüber angeordnete Seite (2056) des zweiten Kraftübertragungselements (205) einfügt.

4. Doppelkupplungsmechanismus (10) nach einem der vorhergehenden Ansprüche, **dadurch gekennzeichnet, dass** das zweite Kraftübertragungselement (205) mindestens eine Öffnung (280) umfasst, um das Einfügen des sich radial erstreckenden inneren Teils (1055) des ersten Kraftübertragungselements (105) zu ermöglichen, wenn sich der erste Aktor (320) axial verlagert, um die erste Kupplung (100) einzurücken.

5. Doppelkupplungsmechanismus (10) nach dem vorhergehenden Anspruch, **dadurch gekennzeichnet, dass** mindestens ein Teil der Öffnungen (280) des zweiten Kraftübertragungselements (205) die Form einer Durchgangsöffnung annimmt.

6. Doppelkupplungsmechanismus (10) nach einem der Ansprüche 4 oder 5, **dadurch gekennzeichnet, dass** mindestens ein Teil der Öffnungen (280) des zweiten Kraftübertragungselements (205) die Form einer lokalen Verdünnung des zweiten Kraftübertragungselements (205) annimmt, wobei die lokale Verdünnung an der dem ersten Kraftübertragungselement (105) gegenüberliegenden Seite (2056) angeordnet ist.

7. Doppelkupplungsmechanismus (10) nach einem der Ansprüche 4 bis 6, **dadurch gekennzeichnet, dass** die Öffnungen (280) des zweiten Kraftübertragungselements (205) radial im Wesentlichen auf der Höhe des ersten Aktors (320) angeordnet sind.

8. Doppelkupplungsmechanismus (10) nach einem der Ansprüche 4 bis 7, **dadurch gekennzeichnet, dass** die Öffnungen (280) des zweiten Kraftübertragungselements (205) mindestens auf einer sich radial erstreckenden Auflagefläche (2054) des zweiten Kraftübertragungselements (205) angeordnet sind.

9. Doppelkupplungsmechanismus (10) nach einem der Ansprüche 4 bis 8, **dadurch gekennzeichnet, dass** das zweite Kraftübertragungselement (205) mindestens zwei Arme (270) umfasst, die beidseits der Öffnungen (280) verteilt sind, um das zweite Kraftübertragungselement (205) auszusteifen.

10. Doppelkupplungsmechanismus (10) nach dem vorhergehenden Anspruch, **dadurch gekennzeichnet, dass** die Arme (270) in einem sich radial erstreckenden Teil (2054) des zweiten Kraftübertragungselements (205) gebildet sind.

11. Doppelkupplungsmechanismus (10) nach einem der vorhergehenden Ansprüche, **dadurch gekennzeichnet, dass** das erste Kraftübertragungselement (105) mindestens einen inneren Finger (1055) umfasst, der in Kontakt mit dem Ende des ersten Aktors (320) ist.

12. Doppelkupplungsmechanismus (10) nach dem vorhergehenden Anspruch, **dadurch gekennzeichnet, dass** die Öffnungen (280) des zweiten Kraftübertragungselements (205) und die inneren Finger (1055) des ersten Kraftübertragungselements (105) winklig regelmäßig um die Drehachse (O) des Doppelkupplungsmechanismus (10) verteilt sind.

13. Doppelkupplungsmechanismus (10) nach einem der Ansprüche 9 oder 10, **dadurch gekennzeichnet, dass** alle seitlichen Maße jedes inneren Fingers (1055) kleiner als die seitlichen Maße der entsprechenden Öffnungen (280) sind, um ein berührungsloses Einfügen jedes inneren Fingers (1055) in die entsprechenden Öffnungen (280) zu ermöglichen, wenn der erste Aktor (320) das erste Kraftübertragungselement (105) axial in Richtung des zweiten Kraftübertragungselements (205) verlagert.

14. Doppelkupplungsmechanismus (10) nach einem der Ansprüche 11 bis 13, **dadurch gekennzeichnet, dass** die Öffnungen (280) des zweiten Kraftübertragungselements (205) radial mit den Fingern (1055) des ersten Kraftübertragungselements (105) fluchten.

15. Getriebesystem (1) für ein Kraftfahrzeug, das einen Doppelkupplungsmechanismus (10) nach einem der vorhergehenden Ansprüche umfasst, bei dem:
- die erste Kupplung (100) mit einer ersten Abtriebswelle (A1) des Getriebes (400) über einen ersten Ausgangslamellenträger (110) drehgekoppelt ist;
- die zweite Kupplung (200) mit einer zweiten Abtriebswelle (A2) des Getriebes (400) über einen zweiten Ausgangslamellenträger (210) drehgekoppelt ist;
- die erste (100) und die zweite (200) Kupplung abwechselnd mit einer Eingangsscheibe (109) drehgekoppelt sind, wobei die Eingangsscheibe (109) mit einer Eingangswelle drehgekoppelt ist, die von mindestens einer Kurbelwelle drehantrieben wird.

## Claims

1. A dual-clutch mechanism (10) intended to be installed between an engine and a transmission (400) of a motor vehicle, the dual-clutch mechanism (10) comprising:
- a subassembly comprising:
- a first clutch (100) with axis of rotation (O);
- a second clutch (200) situated radially on the inside of the first clutch (100);
- an axially extending sleeve (600) rotationally coupled to an input disks carrier (109) of the first (100) and second (200) clutches at a connection zone (650);
- an actuating system (300) comprising a housing (307) which houses:
- a first cylindrical actuator (320) designed to move axially so as to engage or to disengage the first clutch (100);
- a second cylindrical actuator (330) designed to move axially so as to engage or to disengage the second clutch (200);
- a first force-transmission member (105) designed to transmit axial load to the first clutch (100) and generated by the first actuator (320);
- a second force-transmission member (205) designed to transmit axial load to the second clutch (200) and generated by the second actuator (330);
**characterized in that**, at a given radial distance from the axis of rotation (O), a face (2056) of the second force-transmission member (205) is designed to be able to intersect a facing face (1056) belonging to the first force-transmission member (105) .

2. The dual-clutch mechanism (10) as claimed in the preceding claim, **characterized in that** the facing face (1056) belonging to the first force-transmission member (105) forms part of an internal radial extension part (1055) of said first force-transmission member (105).

3. The dual-clutch mechanism (10) as claimed in the preceding claim, **characterized in that**, when the first clutch (100) is configured in its engaged configuration, the internal radial extension part (1055) becomes axially inserted, at least in part, in the face (2056) of the second force-transmission member (205) situated axially facing it.

4. The dual-clutch mechanism (10) as claimed in any one of the preceding claims, **characterized in that** the second force-transmission member (205) comprises at least one hole (280) to allow insertion of the internal radial extension part (1055) of the first force-transmission member (105) when the first actuator (320) moves axially to engage the first clutch (100).

5. The dual-clutch mechanism (10) as claimed in the preceding claim, **characterized in that** at least part of the holes (280) of the second force-transmission member (205) adopts the form of an open-ended hole.

6. The dual-clutch mechanism (10) as claimed in either one of claims 4 and 5, **characterized in that** at least part of the holes (280) of the second force-transmission member (205) takes the form of a local thinning of said second force-transmission member (205), the local thinning being situated on the face (2056) facing the first force-transmission member (105) .

7. The dual-clutch mechanism (10) as claimed in any one of claims 4 to 6, **characterized in that** the holes (280) of the second force-transmission member (205) are situated radially substantially at the level of the first actuator (320).

8. The dual-clutch mechanism (10) as claimed in any one of claims 4 to 7, **characterized in that** the holes (280) of the second force-transmission member (205) are situated at least on a radially extending bearing surface (2054) of the second force-transmission member (205).

9. The dual-clutch mechanism (10) as claimed in any one of claims 4 to 8, **characterized in that** the second force-transmission member (205) comprises at least two arms (270) distributed one on each side of said holes (280) so as to make said second force-transmission member (205) more rigid.

10. The dual-clutch mechanism (10) as claimed in the preceding claim, **characterized in that** the arms (270) are formed in a radial extension part (2054) of the second force-transmission member (205).

11. The dual-clutch mechanism (10) as claimed in any one of the preceding claims, **characterized in that** the first force-transmission member (105) comprises at least one internal finger (1055) in contact with the end of the first actuator (320).

12. The dual-clutch mechanism (10) as claimed in the preceding claim, **characterized in that** the holes (280) of the second force-transmission member (205) and the internal fingers (1055) of the first force-transmission member (105) are uniformly angularly distributed about the axis of rotation (O) of the dual-clutch mechanism (10).

13. The dual-clutch mechanism (10) as claimed in either one of claims 9 and 10, **characterized in that** all the lateral dimensions of each internal finger (1055) are smaller than the lateral dimensions of the corresponding holes (280) so as to allow each internal finger (1055) to be inserted contactlessly in the corresponding holes (280) when the first actuator (320) moves the first force-transmission member (105) axially in the direction of the second force-transmission member (205).

14. The dual-clutch mechanism (10) as claimed in any one of claims 11 to 13, **characterized in that** the holes (280) of the second force-transmission member (205) are radially aligned with the fingers (1055) of the first force-transmission member (105).

15. A transmission system (1) for a motor vehicle, comprising a dual-clutch mechanism (10) as claimed in any one of the preceding claims, in which:
- the first clutch (100) is rotationally coupled to a first output shaft (A1) of the transmission (400) via a first output disks carrier (110);
- the second clutch (200) is rotationally coupled to a second output shaft (A2) of the transmission (400) via a second output disks carrier (210);
- the first (100) and second (200) clutches are alternately rotationally coupled to an input plate (109), said input plate (109) being rotationally coupled to an input shaft rotationally driven by at least one crankshaft.
